# EUROPÄISCHE PATENTANMELDUNG

(11) **EP 4 475 094 A1**
(43) Veröffentlichungstag der Anmeldung: **11.12.2024**
(21) Anmeldenummer: 24177087.4
(22) Anmeldetag: 21.05.2024
(51) Int. Cl.: G06V 20/58, G01C 21/26, G08G 1/14

(54) **VERFAHREN UND ASSISTENZSYSTEM ZUR EINPARKUNTERSTÜTZUNG MITTELS EINER HYBRIDKARTE, ENTSPRECHENDE DIGITALE HYBRIDKARTE UND ENTSPRECHEND EINGERICHTETES KRAFTFAHRZEUG**

(30) Priorität: 05.06.2023 DE 102023205241
(71) Anmelder: VOLKSWAGEN AG, 38440 Wolfsburg (DE)
(72) Erfinder: Hüger, Philipp, 38471 Rühen (DE); Kovarik, Michal, 10200 Praha 10 (CZ); Almkermann, Jens Arik, 31234 Edemissen (DE)

(57) **Zusammenfassung**

Die Erfindung betrifft ein Verfahren und ein Assistenzsystem (15, 17) zum Unterstützen eines Fahrzeugführers (16) beim Abstellen eines Fahrzeugs (14). Dabei wird aus freie Abstellflächen (7) abbildenden Bildteilen verschiedener Kamerabilder (1, 2, 3), ein Mosaikbild (9) zusammengesetzt, das einen Bereich (4), der mehrere Abstellflächen (6, 7) umfasst, ausschließlich mit freien Abstellflächen (7) darstellt. Diesem Mosaikbild (9) werden dann gemäß einer sensorisch erfassten aktuellen Belegung der Abstellflächen (6, 7) entsprechende Kennzeichnungen (11, 12, 13) überlagert, um eine entsprechende Hybridkarte (10) des Bereichs (4) zu erzeugen. Diese Hybridkarte (10) wird dann zum Unterstützen des Fahrzeugführers (16) bereitgestellt. Die Erfindung betrifft auch eine solche Hybridkarte (10) und ein entsprechend eingerichtetes Kraftfahrzeug (14).

## Beschreibung

Die vorliegende Erfindung betrifft ein Verfahren und ein Assistenzsystem zum Unterstützen eines Fahrzeugführers beim Abstellen eines Fahrzeugs. Die Erfindung betrifft weiter eine entsprechende digitale Karte zum Realisieren dieser Unterstützung und ein entsprechend eingerichtetes Kraftfahrzeug.

Das Abstellen eines Fahrzeugs, also beispielsweise das Einparken eines Kraftfahrzeugs auf einem Parkplatz oder dergleichen, kann für viele Fahrer eine herausfordernde Aufgabe sein. Schwierigkeiten können beispielsweise darin bestehen, eine freie und geeignete Abstellfläche zu finden und das jeweilige Fahrzeug dorthin zu manövrieren. Zur Unterstützung des Fahrers gibt es bereits sogenannte Parkassistenten, die beispielsweise beim Vorbeifahren an einer freien Abstellfläche bzw. einer Parklücke ein Signal ausgegeben, gegebenenfalls unterstützt durch eine schematische grafische Umgebungsrepräsentation. Es hat sich aber gezeigt, dass es für Fahrer schwierig sein kann, eine automatisch durch ein entsprechendes Assistenzsystem gefundene freie Abstellfläche in der realen Umgebung zu identifizieren. Zudem können Fahrer zusätzliche Anforderungen an eine Abstellfläche haben, die von bisherigen Systemen nicht berücksichtigt werden. Vor diesem Hintergrund besteht also weiterer Bedarf für Verbesserungen bei der Unterstützung eines Fahrzeugführers beim Abstellen eines Fahrzeugs.

Als einen Ansatz beschreibt die DE 10 2015 206 457 A1 ein Einparkassistenzsystem für ein Fahrzeug. Damit sollen Anordnung, Abmessungen und Belegungszustand eines Parkplatzes erfasst werden. Entsprechende Daten werden dann mit digitalen Kartendaten und/oder Belegungsinformationen in den digitalen Kartendaten fusioniert.

Die DE 10 2018 213 007 A1 beschreibt ein Verfahren zum Kartieren einer Parkumgebung. Darin wird eine digitale Gesamtkarte erstellt durch Erstellen von dreidimensionalen Karten für jedes Sichtfeld mehrerer Sensoreinrichtungen der Parkumgebung und Zusammenführen der Karten zu der Gesamtkarte.

Die DE 10 2018 218 177 A1 beschreibt ein Verfahren zum Steuern eines zumindest teilautomatisierten Parkvorgangs eines Fahrzeugs. Darin werden nicht belegte Parkpositionen und diesen zugeordnete Parkpositionseigenschaften sowie eine Parkpräferenz eines Fahrers des Fahrzeugs ermittelt. Basierend darauf wird dann zumindest eine passende und nicht belegte Parkposition ermittelt und ein zumindest teilautomatisiertes Parken des Fahrzeugs in die ermittelte Parkposition durch ein Parkassistenzsystem des Fahrzeugs durchgeführt.

Die CN 109 147 382 B beschreibt ein intelligentes Parkverfahren. Dabei wird auf eine Parkanforderung eines Fahrzeuggeräts hin von einem Server eine Verbindung zu einem Satelliten aufgebaut. Der Server erfasst dann zum Zeitpunkt des Verbindungssignals von dem Satelliten aufgenommenes erstes Bild und ein zu einem späteren Zeitpunkt aufgenommenes zweites Bild und vergleicht diese miteinander, um freie Parkstände zu erkennen. Entsprechendes Feedback wird dann an das Fahrzeuggerät gesendet.

Als weiteren Ansatz beschreibt die US 11,105,639 B2 ein Verfahren zum Verbessern von Karten. Darin wird ein Satellitenbild eines Bereichs der Erdoberfläche an einer aktuellen Fahrzeugposition aufgenommen. Weiter werden darin freie Abstellflächen identifiziert und damit eine zuvor generierte Karte überarbeitet, sodass sie die identifizierten freien Abstellflächen enthält.

Diese Ansätze lösen aber die eingangs genannten Schwierigkeiten nicht oder zumindest nicht vollständig.

Aufgabe der vorliegenden Erfindung ist es, eine besonders einfach verständliche Unterstützung eines Fahrzeugführers beim Abstellen eines Fahrzeugs zu ermöglichen.

Diese Aufgabe wird durch die Gegenstände der unabhängigen Ansprüche gelöst. Weitere mögliche Ausgestaltungen der Erfindung sind in den Unteransprüchen, der Beschreibung und den Figuren offenbart. Merkmale, Vorteile und mögliche Ausgestaltungen, die im Rahmen der Beschreibung für einen der Gegenstände der unabhängigen Ansprüche dargelegt sind, sind zumindest analog als Merkmale, Vorteile und mögliche Ausgestaltungen des jeweiligen Gegenstands der anderen unabhängigen Ansprüche sowie jeder möglichen Kombination der Gegenstände der unabhängigen Ansprüche, gegebenenfalls in Verbindung mit einem oder mehr der Unteransprüche, anzusehen.

Das erfindungsgemäße Verfahren dient zum Unterstützen eines Fahrzeugführers beim Abstellen eines Fahrzeugs in einer Abstellfläche, die sich in einem Bereich mit mehreren solchen Abstellflächen befindet. Der Fahrzeugführer kann also beispielsweise ein Fahrer sein, der ein Kraftfahrzeug abstellen will, wobei die Abstellfläche beispielsweise ein Parkstand, eine Parklücke, ein Stellplatz oder dergleichen sein kann. Der Bereich mit mehreren solchen Abstellflächen kann dementsprechend also beispielsweise ein Parkplatz oder ein Parkstreifen oder ein Abstellbereich auf privatem Grund oder dergleichen sein. Ebenso kann das erfindungsgemäße Verfahren aber beispielsweise angewendet werden für auf dem Boden fahrende Luftfahrzeuge, also etwa im Bereich eines Flughafens mit mehreren Abstellflächen für Flugzeuge oder dergleichen, oder für Schiffe bzw. Boote, etwa in einem Hafen- oder Anlegebereich mit mehreren einzelnen Anlege- oder Liegestellen oder dergleichen.

In einem Verfahrensschritt des erfindungsgemäßen Verfahrens werden mehrere Kamerabilder des Bereichs zu verschiedenen Zeitpunkten aufgenommen, zu denen unterschiedliche Belegungen bzw. Belegungsmuster der Abstellflächen durch Fahrzeuge, also entsprechend unterschiedliche Belegungssituationen des Bereichs bzw. der Abstellflächen gegeben sind. Diese Kamerabilder werden dabei in einem Zeitraum aufgenommen, der dem Abstellen des Fahrzeugs, also beispielsweise einem Zeitpunkt oder Zeitraum, in dem das Fahrzeug durch den Fahrzeugführer auf oder in dem Bereich mit der Intention zum Abstellen des Fahrzeugs gesteuert wird, zeitlich vorgelagert ist, also vorausgeht. Beispielsweise können die mehreren Kamerabilder über einen Zeitraum von mehreren Stunden, mehreren Tagen, mehreren Wochen oder mehreren Monaten oder dergleichen hinweg aufgenommen werden. Insbesondere können die Kamerabilder bei einem Aufnehmen an unterschiedlichen Tagen, zumindest im Wesentlichen zur gleichen Tageszeit oder bei gleichem Sonnenstand bzw. gleichen Wetterbedingungen oder Lichtverhältnissen aufgenommen werden. Dadurch können spätere Artefakte vermieden oder reduziert werden.

Die Kamerabilder können insbesondere Luftbilder und/oder Satellitenbilder und/oder mittels einer Fahrzeugkamera eines sich in dem Bereich befindenden oder bewegenden Fahrzeugs, beispielsweise mittels einer sogenannten Top-View-Kamera, aufgenommen werden. Ebenso kann als Kamera zum Aufnahmen der Kamerabilder beispielsweise eine in oder an dem Bereich fest installierte, auf den Bereich ausgerichtete Kamera verwendet werden. Dies kann beispielsweise Überwachungskamera für den Bereich sein. Eine solche fest installierte Kamera kann insbesondere an einer relativ zu der eigentlichen Oberflächen des Bereichs erhöhten Position angeordnet sein, beispielsweise an einem Gebäude auf oder neben dem Bereich oder an einem Mast oder dergleichen.

Zur weiteren Verarbeitung können die Kamerabilder dann über eine entsprechende Datenverbindung beispielsweise an eine Servereinrichtung, also etwa ein Backend, einen Cloudserver oder ein Rechenzentrum oder dergleichen, gesendet bzw. dort gesammelt oder aggregiert werden.

In einem weiteren Verfahrensschritt des erfindungsgemäßen Verfahrens werden - ebenfalls dem Abstellen des Fahrzeugs zeitlich vorgelagert - aus diesen aufgenommene Kamerabildern diejenigen Bildteile, die freie, also jeweils nicht durch ein Fahrzeug belegte Abstellflächen zeigen, extrahiert und zu einem Mosaikbild des Bereichs zusammengesetzt. Dieses Mosaikbild zeigt dann den gesamten Bereich mit ausschließlich freien Abstellflächen. Das Mosaikbild kann also je nach Ausgestaltung des jeweiligen Bereichs beispielsweise freie Abstellflächen und daneben oder dazwischen angeordnete Teile des Bereichs, aber keine belegten Abstellflächen zeigen. Mit anderen Worten kann das Mosaikbild also beispielsweise mittels eines sogenannten Stitching-Verfahrens aufgebaut oder zusammengesetzt werden. Die dafür verwendeten Bildteile, die beispielsweise jeweils wenigstens eine freie Abstellfläche zeigen, also darstellen oder abbilden, können aus mehreren, insbesondere zu unterschiedlichen Zeitpunkten aufgenommenen, Kamerabildern stammen und miteinander zu dem Mosaikbild kombiniert werden. Das Mosaikbild ist also zwar kein zu einem einzigen bestimmten Zeitpunkt tatsächlich als solches aufgenommenes Einzelbild des Bereichs, ist aber aus tatsächlich aufgenommenen Bildpunkten bzw. Bildteilen der aufgenommenen Kamerabilder aufgebaut. Damit kann das Mosaikbild also beispielsweise so aussehen oder wirken, wie ein Kamerabild, insbesondere ein Luftbild oder Satellitenbild, das zu einem Zeitpunkt aufgenommen wurde, zudem sämtliche Abstellflächen des Bereichs frei waren, auch wenn dies zu keinem bestimmten Zeitpunkt tatsächlich der Fall war. Das Mosaikbild zeigt also den tatsächlichen realen Bereich als Fotodarstellung und stellt insbesondere keine abstrahierte oder schematische Karte des Bereichs dar.

In einem weiteren Verfahrensschritt des erfindungsgemäßen Verfahrens werden dann, wenn sich das Fahrzeug zum Abstellen in bzw. auf dem Bereich befindet, mittels wenigstens eines Sensors Umgebungsdaten zumindest eines Teils des Bereichs, insbesondere neben dem Fahrzeug, aufgenommen, die eine jeweils aktuelle Belegung bzw. Belegungssituation der dortigen Abstellflächen anzeigen bzw. charakterisieren. Diese Umgebungsdaten können insbesondere mittels eines Sensors bzw. einer Sensorik des Fahrzeugs selbst aufgenommen werden. Ebenso können die Umgebungsdaten aber beispielsweise mittels eines beispielsweise lokal in oder an dem Bereich fest installierten Sensors, also eines Infrastruktursensors aufgenommen werden. Ein solcher Infrastruktursensor kann beispielsweise in den Bereich, also etwa in einen dortigen Boden oder Bodenbelag oder dergleichen, eingelassen oder integriert oder beispielsweise an einer erhöhten Position angeordnet und auf den Bereich ausgerichtet sein, beispielsweise in Form einer Überwachungskamera oder dergleichen. Ebenso ist eine entsprechende Kombination möglich, wobei die Umgebungsdaten dann beispielsweise teilweise von einem Sensor des Fahrzeugs und teilweise von einem Infrastruktursensor stammen bzw. aufgenommen werden können. Damit kann beispielsweise eine Verifizierung oder Plausibilisierung der Erkennung bzw. Identifizierung der aktuellen Belegung durchgeführt werden.

Die aktuelle Belegung kann jeweils angeben, welche der Abstellflächen belegt sind und/oder welche der Abstellflächen frei, also nicht belegt sind.

Der zum Aufnehmen der Umgebungsdaten verwendete wenigstens eine Sensor kann beispielsweise eine Kamera oder eine Induktionsschleife und/oder ein Magnetgeometer und/oder ein Radarsensor und/oder ein Lidarsensor und/oder ein Ultraschallsensor und/oder dergleichen mehr sein oder umfassen.

In einem weiteren Verfahrensschritt des erfindungsgemäßen Verfahrens werden anhand der Umgebungsdaten zumindest in dem jeweiligen Teil des Bereichs jeweils aktuell belegte oder auch freie Abstellflächen ermittelt.

In einem weiteren Verfahrensschritt des erfindungsgemäßen Verfahrens wird basierend darauf und auf dem Mosaikbild eine Hybridkarte zumindest dieses Teils des Bereichs erzeugt. Diese Hybridkarte zeigt die dortige aktuelle Belegung der Abstellflächen, also die dortige aktuelle Belegungssituation. Die Hybridkarte wird erzeugt, indem die anhand der Umgebungsdaten als aktuell belegt ermittelte Abstellflächen als solche in dem Mosaikbild gekennzeichnet, also beispielsweise markiert oder dargestellt oder mit einer entsprechenden Überlagerung versehen werden oder dergleichen. Dazu können den entsprechenden Bildteilen des Mosaikbilds beispielsweise entsprechende vorgegebene Markierungen oder Symbole oder dergleichen überlagert werden. Um damit eine bestimmte anhand der Umgebungsdaten als belegt oder als frei erkannte Abstellfläche als solche zu kennzeichnen, kann eine entsprechende Kennzeichnung der Darstellung genau dieser Abstellfläche in dem Mosaikbild überlagert oder beispielsweise an oder um genau diese Darstellung, also diesen Bildteil des Mosaikbilds dargestellt werden.

In einem weiteren Verfahrensschritt des erfindungsgemäßen Verfahrens wird die so erzeugte Hybridkarte dann zum Unterstützen des Fahrzeugführers bereitgestellt, also beispielsweise ausgegeben oder angezeigt oder eingeblendet, etwa auf einem Bildschirm eines entsprechenden Assistenz- oder Navigationssystems oder dergleichen.

Die Hybridkarte zeigt zumindest bereichsweise eine reale Darstellung, also eine Fotodarstellung des jeweiligen Bereichs. Damit zeigt die Hybridkarte auch konkrete Details des jeweiligen Bereichs, wie beispielsweise Unregelmäßigkeiten oder Fehlstellen von Markierungen und/oder im Bodenbelag des Bereichs und/oder Randsteine und/oder Ausstattungs- oder Infrastrukturelemente, wie etwa Laternen und/oder Bauwerke und/oder Bezahlautomaten und/oder Ladesäulen und/oder Bänke, und/oder dergleichen mehr, wie sie in dem jeweiligen Bereich tatsächlich real vorhanden und somit gegebenenfalls für den Fahrzeugführer auch beim Blick aus dem abzustellenden Fahrzeug heraus in seine Umgebung sichtbar sind. Derartige Details sind in herkömmlichen schematischen Kartendarstellungen nicht praktikabel korrekt darstellbar oder repräsentierbar. Allerdings können diese Details als Wiedererkennungsmerkmale oder optische Ankerpunkte für den Fahrzeugführer dienen und diesem somit die Orientierung erleichtern. Damit ermöglicht die erfindungsgemäße Hybridkarte dem Fahrzeugführer eine besonders einfache Zuordnung von bestimmten Stellen in der Hybridkarte zu entsprechenden Stellen in der realen Umgebung. Der Fahrzeugführer kann anhand der Hybridkarte in dieser erkennbare freie Abstellflächen also besonders einfach, insbesondere einfacher als mit herkömmlichen rein abstrakten bzw. aus rein generischen Grafikelementen aufgebauten Karten, in der realen Umgebung identifizieren. Damit kann der Fahrzeugführer dann beispielsweise eine bestimmte in der Hybridkarte ausgewählte freie Abstellfläche entsprechend einfacher in der realen Umgebung ansteuern, um das Fahrzeug dort abzustellen. Gleichzeitig kann durch eine entsprechende Ausgestaltung der Kennzeichnungen der belegten und/oder freien Abstellflächen in der Hybridkarte, beispielsweise durch generische oder abstrahierte Symbole oder Grafikelemente oder dergleichen, dem Fahrzeugführer ein besonders schnelles Auffinden einer geeigneten freien Abstellfläche beim Blick auf die Hybridkarte ermöglicht werden.

Die Hybridkarte bietet zudem beispielsweise gegenüber der Verwendung eines einfachen Kamerabildes den Vorteil, dass die reale Belegung der Abstellflächen jeweils korrekt dargestellt wird und zudem besonders einfach und aufwandsarm dynamisch bzw. flexibel auf Basis des Mosaikbilds des jeweiligen Bereichs an die aktuelle reale Situation angepasst werden kann. So muss das Mosaikbild für einen bestimmten Bereich beispielsweise nur einmalig erzeugt werden. Dieses einmal erzeugte Mosaikbild kann dann aber zum dynamischen Generieren oder Anpassen der die jeweils aktuelle Belegung anzeigenden Hybridkarte verwendet werden. Dies kann insbesondere lokal, also beispielsweise von einem Assistenzsystem des abzustellenden Fahrzeugs selbst durchgeführt werden. Dazu kann darin beispielsweise das Mosaikbild hinterlegt sein und diesem dann jeweils die Kennzeichnung der aktuell als belegt oder frei erkannten Abstellflächen überlagert werden.

Dadurch, dass die Kamerabilder zum Erzeugen des Mosaikbilds über einen vergleichsweise langen Zeitraum hinweg aufgenommen werden können, kann dabei besonders zuverlässig sichergestellt werden, dass das Mosaikbild tatsächlich derart erzeugt werden kann, dass es ausschließlich freie Abstellflächen zeigt, also Bildteile für sämtliche Abstellflächen des jeweiligen Bereichs in einem unbelegten, also freien Zustand enthält. Zudem ist damit dann, wenn das Fahrzeug aktuell, typischerweise möglichst schnell, abgestellt werden soll, keine Datenverbindung zu einem Satelliten, der sich zudem dann genau zu diesem Zeitpunkt über dem jeweiligen Bereich befinden müsste, notwendig, sodass entsprechende Verzögerungen und entsprechender Aufwand vermieden werden können.

In einer möglichen Ausgestaltung der vorliegenden Erfindung wird zum Erkennen der freien Abstellflächen in den Kamerabildern auf diese ein bildverarbeitendes Objekterkennungsverfahren angewendet. Dazu kann beispielsweise ein klassischer bzw. herkömmlicher Bildverarbeitungs- oder Objekterkennungsalgorithmus oder ein auf dem maschinellen Lernen oder auf dem Computersehen basierendes Verfahren angewendet werden. Insbesondere in letzterem Fall können die Kamerabilder also beispielsweise mittels eines entsprechend trainierten künstlichen neuronalen Netzes oder dergleichen verarbeitet werden. Das Objekterkennungsverfahren kann hier beispielsweise direkt zum Erkennen der freien Abstellflächen und/oder zum Erkennen von abgestellten Fahrzeugen und damit also zum Identifizieren von belegten Abstellflächen, und/oder zum Erkennen von Markierungen der Abstellflächen und/oder von Trennungen zwischen den Abstellflächen und/oder dergleichen mehr angewendet werden. Auf diese Weise können also die freie Abstellflächen zeigenden Bildteile besonders einfach und schnell, insbesondere ohne auf zusätzliche externe Daten angewiesen zu sein, erkannt bzw. identifiziert werden.

In einer weiteren möglichen Ausgestaltung der vorliegenden Erfindung sind oder umfassen die Kamerabilder Luft- und/oder Satellitenbilder. Es werden zum Erkennen der freien Abstellflächen in den Kamerabildern zu deren jeweiligem Aufnahmezeitpunkt auch mittels wenigstens eines von einer zum Aufnehmen der Kamerabilder verschiedenen lokalen Sensors in dem Bereich Sensordaten aufgenommen. Aus diesen Sensordaten werden dann freie und/oder belegte Abstellflächen, also die aktuelle Belegung der Abstellflächen in den Bereich bzw. entsprechende Belegungsdaten ermittelt. Basierend darauf werden dann die die freien Abstellflächen zeigenden Bildteile der Luft- und/oder Satellitenbilder bestimmt. Als entsprechender lokaler Sensor kann beispielsweise eine Umgebungssensorik wenigstens eines sich zu dem jeweiligen Zeitpunkt in oder auf dem Bereich aufhaltenden Fahrzeugs verwendet werden. Ebenso können beispielsweise die an anderer Stelle genannten Infrastruktursensoren des Bereichs verwendet werden. Der lokale Sensor kann insbesondere keine Kamera sein, also auf nach einem anderen Funktionsprinzip arbeiten. Damit können die freien Abstellflächen besonders zuverlässig, insbesondere eindeutig erkannt werden. Ein solcher Sensor kann beispielsweise ein Radarsensor oder ein Lidarsensore oder ein Ultraschallsensor oder eine Induktionsschleife oder ein Magnetometer oder ein Druck- bzw. Belastungssensor oder dergleichen mehr sein oder umfassen. Die Kamerabilder einerseits und die korrespondierenden Sensordaten oder die daraus ermittelte Belegung, also entsprechende Belegungsdaten für den Bereich, welche aktuell belegte Abstellflächen und/oder aktuell freie Abstellflächen angeben bzw. identifizieren, andererseits können dann beispielsweise in einer Servereinrichtung, also etwa einem Backend oder Cloudserver oder Rechenzentrum oder dergleichen, zusammengeführt werden. Dort kann dann darauf basierend das Mosaikbild für den jeweiligen Bereich erzeugt werden. Die hier vorgeschlagene Ausgestaltung der vorliegenden Erfindung kann eine besonders genaue und zuverlässige Erkennung der freien Abstellflächen ermöglichen. Beispielsweise können dazu entsprechende Positionsdaten für den verwendeten Sensor, die eine jeweilige Position des verwendeten Sensors, beispielsweise in einem vorgegebenen oder weltfesten Koordinatensystem, angegeben, berücksichtigt werden. Damit kann das jeweilige Mosaikbild besonders genau und besonders zuverlässig erzeugt werden bzw. besonders zuverlässig tatsächlich nur freie Abstellflächen zeigen. Die hier vorgeschlagene Ausgestaltung der Erfindung kann insbesondere dann besonders nützlich sein, wenn die Kamerabilder Luft- und/oder Satellitenbilder sind oder umfassen.

In einer weiteren möglichen Ausgestaltung der vorliegenden Erfindung wird zum Zeigen der aktuellen Belegung in der Hybridkarte denjenigen Bildteilen des Mosaikbilds, die zu den anhand der Umgebungsdaten als aktuell belegt erkannten Abstellflächen korrespondieren, also diese Abstellflächen - wenn auch in einem freien Zustand - zeigen, ein vorgegebenes Fahrzeugsymbolbild überlagert. Es kann also allen jeweils aktuell als belegt erkannten Abstellflächen des Bereichs oder des Teils des Bereichs bzw. allen entsprechenden Bildteilen des Mosaikbilds ein standardisiertes bzw. einheitliches, insbesondere stilisiertes oder schematisches, Belegungssymbol, also etwa ein Fahrzeugsymbolbild oder dergleichen überlagert werden. Ein solches Symbol oder Symbolbild kann also anzeigen, dass die entsprechende Abstellfläche aktuell von einem anderen Fahrzeug belegt ist. Damit können die aktuell belegten Abstellflächen in der Hybridkarte besonders schnell und einfach und konsistent für den Fahrzeugführer als belegte Abstellflächen erkennbar sein. So muss der Fahrzeugführer dann beispielsweise keinerlei kognitiven Aufwand aufwenden, um andernfalls eventuell unterschiedliche Kennzeichnungen oder Darstellungen verschiedener belegter Abstellflächen zu erkennen oder zu verstehen. Damit kann auch eine unnötige Ablenkung bzw. eine unnötige Beanspruchung der Aufmerksamkeit des Fahrzeugführers vermieden oder reduziert werden, was der Sicherheit im Verkehrsgeschehen in dem jeweiligen Bereich zugutekommen kann.

In einer weiteren möglichen Ausgestaltung der vorliegenden Erfindung wird zum Zeigen der aktuellen Belegung in dem Bereich oder dem Teil des Bereichs in der Hybridkarte denjenigen Bildteilen des Mosaikbilds, die zu anhand der Umgebungsdaten als aktuell freierkannten Abstellflächen korrespondieren, also diese Abstellflächen zeigen, ein vorgegebenes Verfügbarkeitssymbol oder Abstellflächensymbolbild überlagert. Mit anderen Worten können also alle aktuell als frei erkannten Abstellflächen in der Hybridkarte mit einem einheitlichen oder standardisierten, insbesondere stilisierten oder schematischen, Abstellflächensymbolbild gekennzeichnet werden. Für einen Parkplatz kann ein solches Abstellflächensymbol beispielsweise eine blaue Fläche mit einem weißen P oder beispielsweise auch einer weißen Umrandung oder dergleichen sein oder umfassen. DAs Abstellflächensymbolbild kann beispielsweise auf die Größe der jeweiligen Abstellfläche angepasst werden, also diese zumindest im Wesentlichen vollständig ausfüllen oder überdecken. Damit können beispielsweise auch gegebenenfalls unterschiedlich große aktuell freie Abstellflächen einheitlich gekennzeichnet werden. Die Kennzeichnung der freien Abstellflächen durch ein vorgegebenes Abstellflächensymbolbild kann dem Fahrzeugführer ein besonders einfaches, schnelles und intuitives sowie ablenkungsarmes Erkennen der aktuell freien Abstellflächen beim Betrachten der Hybridkarte ermöglichen.

In einer weiteren möglichen Ausgestaltung der vorliegenden Erfindung werden zum Erzeugen der Hybridkarte dem Mosaikbild auch vorgegebene, also beispielweise einheitliche oder standardisierte, insbesondere stilisierte oder schematische, Symbole für vorgegebene bzw. vordefinierte Infrastruktur- oder Ausstattungsmerkmale des jeweiligen Bereichs positionsgenau überlagert. Mit anderen Worten kann ein solches Symbol in der Hybridkarte an einer Stelle dargestellt werden, die derjenigen realen Stelle oder Position entspricht, an der sich das jeweilige Infrastruktur- oder Ausstattungsmerkmale in dem jeweiligen Bereich tatsächlich real befindet. Solche Infrastruktur- oder Ausstattungsmerkmale können insbesondere Lademöglichkeiten, also beispielsweise Ladeanschlüsse oder Ladesäulen oder Induktionsladeschleifen oder dergleichen sein oder umfassen. Ebenso können durch jeweilige Symbole andere Infrastruktur- oder Ausstattungsmerkmale des Bereichs in der Hybridkarte repräsentiert werden, wie beispielsweise Bezahlautomaten, Ausgänge, WCs, Einkaufsmöglichkeiten und/oder dergleichen mehr. Die hier vorgeschlagene symbolhafte, also schematische oder abstrahierte Darstellung oder Kennzeichnung solcher Infrastruktur- oder Ausstattungsmerkmale in der Hybridkarte kann dem Fahrzeugführer ein besonders einfaches und schnelles Erkennen bzw. Identifizieren solcher Infrastruktur- oder Ausstattungsmerkmale ermöglichen. Dies kann beispielsweise der Fall sein, da derartige Infrastruktur- oder Ausstattungsmerkmale, insbesondere von oben, also aus der Perspektive der Luft- oder Satellitenbilder betrachtet, in unterschiedlichen Bereichen bzw. Ausgestaltungen unterschiedlich aussehen und eine relativ kleine Fläche einnehmen und damit in einem entsprechenden Bildteil eines Luft- oder Satellitenbildes nur schwierig erkennbar bzw. identifizierbar sein können.

In einer weiteren möglichen Ausgestaltung der vorliegenden Erfindung wird automatisch eine aktuell als frei erkannte Abstellfläche des jeweiligen Bereichs als Zielabstellfläche für das abzustellenden Fahrzeug ausgewählt. In der Hybridkarte wird dann ein Hinweis auf diese ausgewählte Zielabstellfläche angezeigt. Die Zielabstellfläche kann beispielsweise basierend auf der aktuellen Position des abzustellenden Fahrzeugs und/oder vorgegebenen oder automatisch bestimmten Anforderungen des Fahrzeugführers an eine Abstellfläche, beispielsweise hinsichtlich einer vorhandenen Lademöglichkeit und/oder einem ausreichenden Platz etwa für ein Ein- oder Ausstieg und/oder ein Ein- oder Ausladen und/oder einer Barrierefreiheit oder dergleichen, ausgewählt werden. Das Auswählen dieser Abstellfläche als Zielabstellfläche kann beispielsweise durch ein entsprechendes Assistenzsystem des abzustellenden Fahrzeugs, also etwa einen entsprechenden Parkassistenten oder dergleichen, automatisch durchgeführt werden. Durch den Hinweis kann die ausgewählte Zielabstellfläche beispielsweise gegenüber eventuell vorhandenen anderen freien Abstellflächen hervorgehoben sein, etwa durch einen Rahmen und/oder ein Symbol und/oder eine andere Farbe oder dergleichen. Ebenso kann in der Hybridkarte beispielsweise auch das abzustellende Fahrzeug an dessen aktueller Position in der Hybridkarte repräsentiert und zumindest als Teil des Hinweises auf die ausgewählte Zielabstellfläche eine Trajektorie von dieser Repräsentation des abzustellenden Fahrzeugs zu der ausgewählten Zielabstellfläche dargestellt werden oder dergleichen. Damit kann der Fahrzeugführer noch effektiver beim Abstellen des Fahrzeugs unterstützt werden.

Die vorliegende Erfindung betrifft auch eine digitale Hybridkarte eines Bereichs, der mehrere Abstellflächen für Fahrzeuge bzw. für jeweils ein Fahrzeug umfasst. Dabei stellt die erfindungsgemäße, insbesondere gemäß dem erfindungsgemäßen Verfahren erzeugte, Hybridkarte den Bereich als Kombination aus fahrzeugfreien Bildteilen von Kamerabildern des Bereichs und diesen gemäß einer jeweils aktuellen Belegung der Abstellflächen überlagerten Kennzeichnungen der jeweils aktuell belegten Abstellflächen und/oder der jeweils aktuell freien Abstellflächen dar. Die erfindungsgemäße Hybridkarte kann also insbesondere die im Zusammenhang mit dem erfindungsgemäßen Verfahren genannte Hybridkarte sein oder dieser entsprechen. Die erfindungsgemäße Hybridkarte kann insbesondere als digitaler Datensatz vorliegen. Die Hybridkarte, also beispielsweise der entsprechende Datensatz, kann insbesondere auf oder in einem computerlesbaren Datenspeicher gespeichert sein. Ein solcher Datenspeicher kann ebenfalls als Hybridkarte im Sinne der vorliegenden Erfindung aufgefasst werden. Ebenso kann die vorliegende Erfindung einen solchen computerlesbaren Datenspeicher, auf oder in dem eine solche digitale Hybridkarte bzw. ein entsprechender Datensatz gespeichert ist, betreffen. Ein solcher Datenspeicher kann also seinerseits ein weiterer Aspekt der vorliegenden Erfindung sein.

Die vorliegende Erfindung betrifft auch ein Assistenzsystem zum Unterstützen eines Fahrzeugführers beim Abstellen eines Fahrzeugs. Das erfindungsgemäße Assistenzsystem weist eine Eingangsschnittstelle, eine Datenverarbeitungseinrichtung und eine Ausgangsschnittstelle auf. Die Eingangsschnittelle und die Ausgangsschnittstelle können separat voneinander oder in einer gemeinsamen Schnittstelle integriert oder kombiniert sein. Die Eingangsschnittelle und die Ausgangsschnittstelle können jeweils ganz oder teilweise in Hardware und/oder in Software ausgeführt sein. Das erfindungsgemäße Assistenzsystem ist dazu eingerichtet, ein Mosaikbild eines mehrere Abstellflächen für Fahrzeuge umfassenden Bereichs, das aus fahrzeugfreien Bildteilen von mehreren, insbesondere zu unterschiedlichen Zeitpunkten aufgenommenen, Kamerabildern des Bereichs zusammengesetzt ist, zu erzeugen oder, beispielsweise über die Eingangsschnittstelle, zu erfassen. Weiter ist das Assistenzsystem dazu eingerichtet, die Umgebungsdaten zumindest eines Teils des Bereichs, die eine dortige aktuelle Belegung der Abstellflächen charakterisieren oder angeben, zu erfassen. Weiter ist das Assistenzsystem dazu eingerichtet, basierend auf dem Mosaikbild und den aktuellen Umgebungsdaten, also der entsprechenden aktuellen Belegung der Abstellflächen, eine Hybridkarte, insbesondere die erfindungsgemäße Hybridkarte, in der aktuell belegte Abstellflächen und/oder aktuell freie Abstellflächen durch ansprechende Überlagerungen der korrespondierenden Bildteile des Mosaikbilds gekennzeichnet sind, zu erzeugen und zum Unterstützen des Fahrzeugführers beim Abstellen des Fahrzeugs auf oder in einer freien Abstellfläche bereitzustellen.

Das erfindungsgemäße Assistenzsystem kann also je nach Ausgestaltung beispielsweise ein Assistenzsystem bzw. Steuergerät für ein Fahrzeug sein oder als fahrzeugexterne Servereinrichtung, also etwa als Backend oder Cloudserver oder Rechenzentrum oder dergleichen, ausgestaltet sein oder sowohl ein Assistenzsystem bzw. Steuergerät für ein Fahrzeug als auch eine fahrzeugexterne Servereinrichtung, die für eine entsprechende Zusammenarbeit eingerichtet sind, umfassen. Das erfindungsgemäße Assistenzsystem kann also zum, insbesondere automatischen oder teilautomatischen, Ausführen des erfindungsgemäßen Verfahrens oder eines, beispielsweise serverseitigen oder fahrzeugseitigen, Teils des erfindungsgemäßen Verfahrens, also zur Verwendung in dem erfindungsgemäßen Verfahren ausgestaltet und eingerichtet sein.

Die vorliegende Erfindung betrifft auch ein Kraftfahrzeug, das mit dem erfindungsgemäßen Assistenzsystem in dessen Ausgestaltung als Assistenzsystem für ein Fahrzeug ausgestattet ist. Das erfindungsgemäße Kraftfahrzeug kann also insbesondere das im Zusammenhang mit dem erfindungsgemäßen Verfahren und/oder der erfindungsgemäßen Hybridkarte und/oder dem erfindungsgemäßen Assistenzsystem genannte abzustellende Fahrzeug sein oder diesem entsprechen. Das Assistenzsystem des erfindungsgemäßen Kraftfahrzeugs kann beispielsweise das vorgefertigte Mosaikbild des jeweiligen Bereichs bereits in einem Datenspeicher des Assistenzsystems enthalten und/oder dazu eingerichtet sein, das Mosaikbild von der fahrzeugexternen Servereinrichtung zu erfassen, also abzurufen oder zu empfangen. Das erfindungsgemäße Kraftfahrzeug kann insbesondere auch eine Ausgabe- bzw. Anzeigeneinrichtung, also etwa einen Bildschirm oder ein Display, zum Ausgeben bzw. Anzeigen der jeweiligen Hybridkarte umfassen. Diese Ausgabe- bzw. Anzeigeneinrichtung kann dabei Teil des Assistenzsystems oder mit diesem gekoppelt sein. Ebenso kann das erfindungsgemäße Kraftfahrzeug beispielsweise eine Sensorik bzw. Umgebungssensorik zum Aufnehmen der im Zusammenhang mit dem erfindungsgemäßen Verfahren genannten Umgebungsdaten und/oder Sensordaten aufweisen.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung einer Serie von zu unterschiedlichen Zeitpunkten aufgenommenen Kamerabildern eines Parkplatzes;
- Fig. 2: eine schematische Darstellung zur Veranschaulichung einer zur Aufnahme der Kamerabilder korrespondierenden Aufnahme von lokalen Umgebungsdaten auf Parkplatz;
- Fig. 3: eine schematische Darstellung einem aus den Kamerabildern zusammengesetzten Mosaikbild des Parkplatzes;
- Fig. 4: eine schematische Darstellung einem weiteren Mosaikbild eines Parkplatzes;
- Fig. 5: eine schematische Darstellung einer unter Verwendung des weiteren Mosaikbilds erzeugte Hybridkarte des Parkplatzes mit Überlagerungen zum Kennzeichnen von belegten und freien Abstellflächen; und
- Fig. 6: eine schematische Darstellung eines Kraftfahrzeugs und einer fahrzeugexternen Servereinrichtung zum Unterstützen eines Fahrers beim Einparken des Kraftfahrzeugs mithilfe einer Hybridkarte eines Parkplatzes.

Gleiche oder funktionsgleiche Elemente sind in den Figuren mit den gleichen Bezugszeichen versehen. Von mehrfach vorhandenen gleichen oder gleichartigen Elementen ist in den Figuren der Übersichtlichkeit halber gegebenenfalls zumindest zum Teil nur eine repräsentative Auswahl explizit gekennzeichnet.

Zum Unterstützen des Abstellens eines Fahrzeugs, das nachfolgend am Beispiel eines Einparkens eines PKWs auf einem Abstellbereich erläutert wird, kann eine Draufsichtkarte des entsprechenden Abstellbereichs nützlich sein. Wird als eine solche Draufsichtkarte jedoch ein einfaches Luft- oder Satellitenbild verwendet, so kann dies zu Verwirrung führen, da die darin dargestellte Belegungssituation, also die Verteilung geparkte Fremdfahrzeuge, typischerweise nicht der momentanen Realität vor Ort entspricht. Ebenso kann es problematisch sein, beispielsweise mittels einer heutzutage für Fahrassistenzfunktionen typischen fahrzeugeigenen Front- oder Heckkamera eines abzustellenden Fahrzeugs den umgebenden Abstellbereich aufzunehmen, um die Draufsichtkarte zu erstellen. So kann eine solche fahrzeugeigene Kamera typischerweise keine günstige Perspektive bieten, beispielsweise nicht auf Dächer gepackter Fremdfahrzeuge blicken. Zudem könnte die Draufsichtkarte für einen ausgedehnten Bereich dann nicht instantan aufgenommen bzw. erzeugt werden, sondern müsste aus einer Serie von über die Zeit hinweg aufgenommenen Bildern zusammengesetzt werden. Dies kann ebenfalls zu Schwierigkeiten führen, da beispielsweise dynamische, also sich bewegende oder von der Perspektive abhängige Objekte oder Schatten oder dergleichen gegebenenfalls mehrfach und/oder inkonsistenter Weise in der resultierenden Draufsichtkarte dargestellt würden.

Vorliegend soll daher eine entsprechende Draufsichtkarte zum Unterstützen des Abstellens eines Fahrzeugs erzeugt werden, die diese Probleme vermeidet, also beispielsweise um bereits geparkte Fremdfahrzeuge bereinigt ist, die tatsächliche aktuelle Belegung bzw. Belegungssituation anzeigt, eine günstige bzw. nützliche Perspektive bietet und keine oder möglichst wenige Artefakte aufweist.

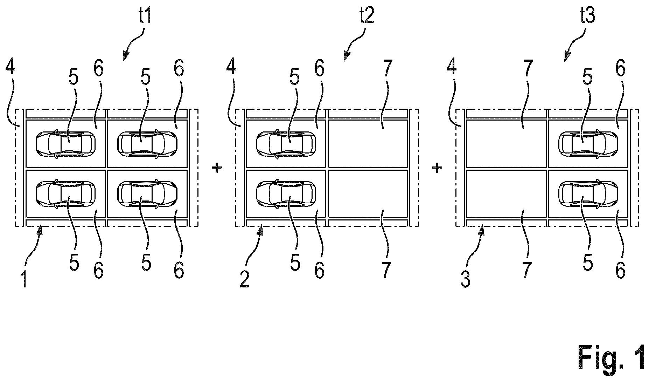

Zur Veranschaulichung eines ersten Verfahrensschrittes zeigt Fig. 1 mehrere Kamerabilder, bei denen es sich hier beispielhaft um Luft- oder Satellitenbilder handelt. Diese umfassen hier ein erstes Bild 1, das zu einem ersten Zeitpunkt t1 aufgenommen wurde, ein zweites Bild 2, das zu einem zweiten Zeitpunkt t2 aufgenommen wurde, und ein drittes Bild 3, das zu einem dritten Zeitpunkt t3 aufgenommen wurde. Die Bilder 1, 2, 3 zeigen dabei denselben Parkplatz 4, der mehrere Parkstände umfasst. Jedoch liegen die Zeitpunkte t1, t2, t3 zeitlich weit genug auseinander, sodass sich zwischenzeitlich die Belegung, also die Anwesenheit und Verteilung von geparkten Fahrzeugen 5 auf dem Parkplatz 4 geändert hat. So sind zu dem Zeitpunkt t1 sämtliche Parkstände des Parkplatzes 4 durch geparkte Fahrzeuge 5 belegt, sodass dementsprechend in dem ersten Bild 1 ausschließlich belegte Parkstände 6 erkennbar bzw. abgebildet sind. Zu dem Zeitpunkt t2 ist eine andere Belegungssituation gegeben, in der zwei Parkstände des Parkplatzes 4 belegt und zwei andere Parkstände des Parkplatzes 4 frei sind. Dementsprechend sind in dem zweiten Bild 2 zwei belegte Parkstände 6 und zwei freie Parkstände 7 des Parkplatzes 4 erkennbar. Diese Belegungssituation hat sich hier zu dem Zeitpunkt t3 umgekehrt, sodass die zu dem Zeitpunkt t2 belegten Parkstände 6 zu dem Zeitpunkt t3 nun frei sind und umgekehrt. Dementsprechend sind in dem dritten Bild 3 nun ebenfalls zwei belegte Parkstände 6 und zwei freie Parkstände 7 dargestellt, wobei im Vergleich zu dem zweiten Bild 2 jedoch andere Parkstände belegt und frei sind. Wie hier schematisch durch +-Zeichen angedeutet, können diese drei zu den unterschiedlichen Zeitpunkten t1, t2, t3 aufgenommenen Bilder 1, 2, 3 miteinander kombiniert werden.

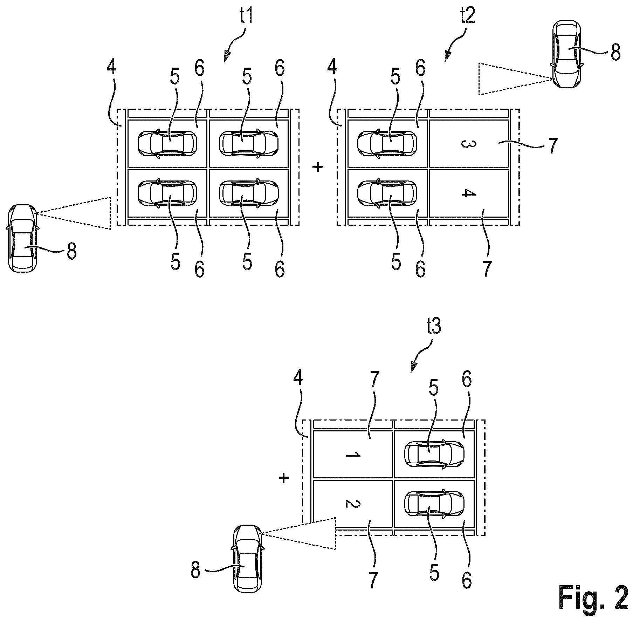

Dazu werden über alle aufgenommenen Bilder 1, 2, 3 hinweg sämtliche Bildteile identifiziert, die freie Parkstände 7 zeigen. Dazu können beispielsweise die Bilder 1, 2, 3 mittels eines entsprechenden bildverarbeitenden Objekterkennungsverfahren zum Erkennen der freien Parkstände 7 verarbeitet werden. Ebenso können die freien Parkstände 7 sensorisch lokal vor Ort, also auf dem Parkplatz 4 selbst zu den jeweiligen Zeitpunkten t1, t2, t3 detektiert werden. Dies ist beispielhaft und schematisch in Fig. 2 veranschaulicht. Hier ist der Parkplatz 4 in schematischer Form ebenfalls zu den verschiedenen Zeitpunkten t1, t2, t3 mit den dann gegebenen unterschiedlichen Belegungen dargestellt. Die Parkstände des Parkplatzes 4 sind hier zur besseren Identifizierbarkeit mit fortlaufenden Ziffern von 1 bis 4 durchnummeriert. Damit ist erkennbar, dass zum Zeitpunkt t2 beispielhaft die Parkstände 3 und 4 frei und die übrigen Parkstände belegt sind, während zum Zeitpunkt t3 die Parkstände 1 und 2 frei sind, während die Parkstände 3 und 4 dann belegt sind.

Zu den verschiedenen Zeitpunkten t1, t2, t3 können sich ein oder mehr weitere Fahrzeuge auf dem Parkplatz 4 befinden oder bewegen, beispielsweise auf der Suche nach einem freien Parkstand 7 oder beim Verlassen eines Parkstandes bzw. des Parkplatzes 4. Beispielhaft ist hier zu jedem der Zeitpunkte t1, t2, t3 ein solches weiteres Fahrzeug als Beobachtungsfahrzeug 8 dargestellt. Diese Beobachtungsfahrzeuge 8 weisen jeweils eine Umgebungssensorik auf, die beispielsweise eine Kamera und/oder einer Lidareinrichtung und/oder einen Ultraschallsensor oder dergleichen umfassen kann. Damit können zum jeweiligen Zeitpunkt t1, t2, t3 die hier ebenfalls schematisch angedeuteten gegebenenfalls auf dem Parkplatz 4 vorhandenen geparkten Fahrzeuge 5 und/oder gegebenenfalls vorhandene freie Parkstände 7 detektiert, also als solche erkannt werden. Dies ist hier durch entsprechende schematisch angedeutete seitlich von den Beobachtungsfahrzeugen 8 ausgehende Erfassungs- oder Sichtkegel der Umgebungssensoriken angedeutet.

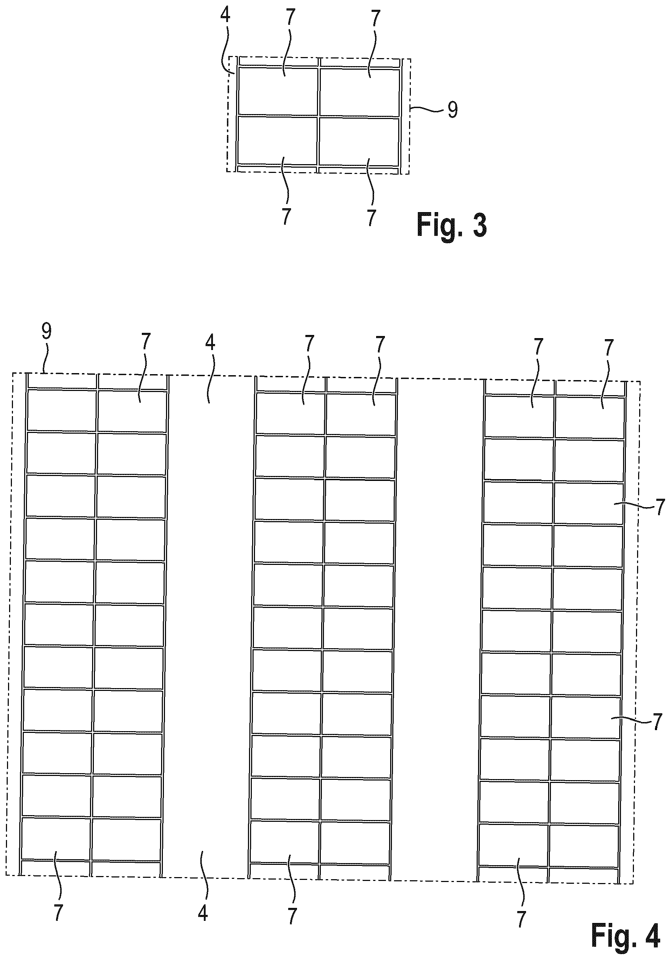

Anhand entsprechender von den Beobachtungsfahrzeugen 8 aufgenommener Umgebungsdaten kann ermittelt werden, bei welchen der Parkstände des Parkplatzes 4 es sich zum jeweiligen Zeitpunkt t1, t2, t3 um freie Parkstände 7 handelt. Entsprechende Umgebungs- oder Belegungsdaten können mit den in Fig. 1 dargestellten Bildern 1, 2, 3 kombiniert werden. Als Resultat ist in Fig. 3 ein Mosaikbild 9 des Parkplatzes 4 dargestellt. Dieses ist aus denjenigen Bildteilen der Bilder 1, 2, 3 zusammengesetzt, die freie Parkstände 7 darstellen. Somit zeigt das Mosaikbild 9 den Parkplatz 4 vollständig, aber ausschließlich mit freien Parkstände 7, also effektiv um die in den Bildern 1, 2, 3 abgebildeten geparkten Fahrzeuge 5 bereinigt.

Zur weiteren Veranschaulichung zeigt Fig. 4 ein weiteres solches Mosaikbild 9 eines größeren Parkplatzes 4, der eine Vielzahl von Parkständen umfasst. Diese sind hier ebenfalls sämtlich als freie Parkstände 7 dargestellt.

Ein solches Mosaikbild 9 kann dann jeweils als Ausgangsbasis zum Erzeugen einer Draufsichtkarte des jeweiligen Parkplatzes 4 für eine konkrete Unterstützung eines Fahrzeugführers beim Abstellen eines Fahrzeugs auf dem jeweiligen Parkplatz 4 dienen.

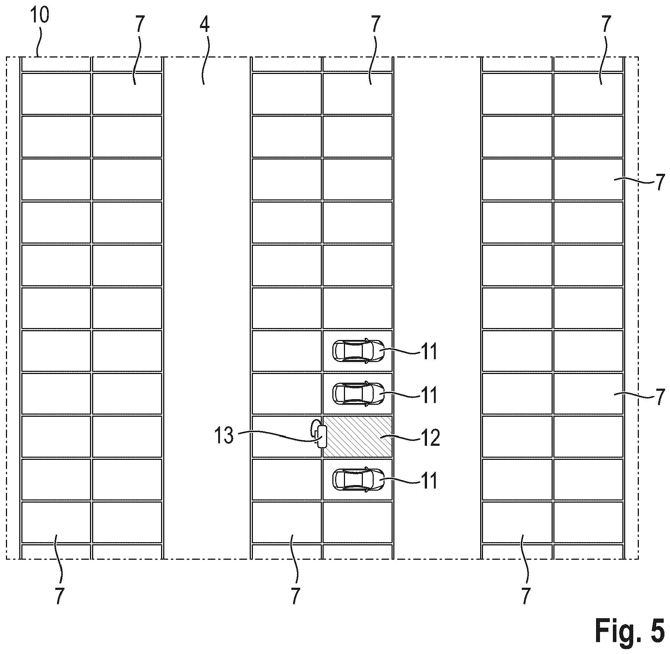

Dazu zeigt Fig. 5 eine entsprechende Draufsichtkarte in Form einer Hybridkarte 10 des auch in Fig. 4 dargestellten Parkplatzes 4. Diese Hybridkarte 10 wird beispielsweise erzeugt, indem dann, wenn ein Fahrzeug auf dem Parkplatz 4 abgestellt werden soll, die dann gegebene aktuelle Belegung bzw. Belegungssituation ermittelt wird und den entsprechenden Bildteilen des Mosaikbilds 9 dann dazu korrespondierend entsprechende Kennzeichnungen oder Symbole überlagert werden. Beispielhaft enthält die Hybridkarte 10 hier dementsprechend mehrere Fahrzeugsymbole 11, die zum jeweils aktuellen Zeitpunkt als belegt erkannten Parkständen überlagert sind, und ein Parksymbol 12, das einem zum jeweils aktuellen Zeitpunkt als frei erkannten Parkstand überlagert ist. Darüber hinaus enthält die Hybridkarte 10 hier beispielhaft auch ein Ladesäulensymbol 13, das an einer Stelle eingeblendet ist, an der sich auf dem realen Parkplatz 4 eine Ladesäule befindet. Die entsprechenden Überlagerungen, hier also beispielhaft die Fahrzeugsymbole 11, das Parksymbol 12 und das Ladesäulensymbol 13, sind hier beispielhaft nur in einem Teil des Parkplatzes 4 bzw. der Hybridkarte 10 dargestellt bzw. eingeblendet, also dem Mosaikbild 9 überlagert. Dieser Teil des Parkplatzes 4 kann beispielsweise einem zu dem jeweiligen Zeitpunkt mittels einer Umgebungssensorik des abzustellenden Fahrzeugs erfassbaren Teil des Parkplatzes 4 entsprechen. Je nach verfügbaren Daten können ebenso weitere der hier außerhalb dieses Teils als freie Parkstände 7 dargestellten Bereiche entsprechend durch Überlagerungen oder Symbole gekennzeichnet werden.

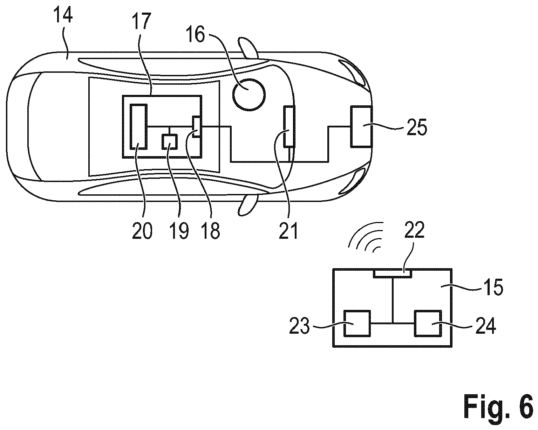

Zur weiteren Veranschaulichung zeigt Fig. 6 eine schematische Übersichtsdarstellung mit einem Kraftfahrzeug 14 und einer fahrzeugexternen Servereinrichtung 15. Bei dem Kraftfahrzeug 14 kann es sich insbesondere um das genannte auf dem Parkplatz 4 abzustellende Fahrzeug handeln. Ebenso kann das Kraftfahrzeug 14 - gleichzeitig und/oder zu anderen Zeitpunkten - als eines der Beobachtungsfahrzeuge 8 fungieren.

Das Kraftfahrzeug 14 wird hier beispielsweise von einem Fahrer 16 gesteuert, der beim Abstellen des Kraftfahrzeugs 14 auf einem aktuell freien Parkstand 7 des Parkplatzes 4 unterstützt werden soll. Dazu weist das Kraftfahrzeug 14 ein entsprechendes Assistenzsystem 17 auf. Dieses ist hier schematisch mit einer Schnittstelle 18, einem Prozessor 19 und einem Datenspeicher 20 repräsentiert. Weiter weist das Kraftfahrzeug 14 eine Anzeigeneinrichtung 21, also beispielsweise einen Bildschirm, auf, um die jeweils generierte Hybridkarte 10 anzuzeigen, also für den Fahrer 16 auszugeben oder bereitzustellen.

Das der jeweiligen Hybridkarte 10 zugrundeliegende Mosaikbild 9 kann beispielsweise durch die Servereinrichtung 15 erzeugt und an das Kraftfahrzeug 14 bzw. dessen Assistenzsystem 17 übermittelt bzw. durch das Assistenzsystem 17 von der Servereinrichtung 15 abgerufen werden. Dazu weist die Servereinrichtung 15 hier schematisch angedeutet eine Serverschnittstelle 22, einen Serverprozessor 23 und einen Serverdatenspeicher 24 auf. Über die Serverschnittstelle 22 kann die Servereinrichtung 15 Kamerabilder, insbesondere Luft- und/oder Satellitenbilder oder Bilder einer Fahrzeug- oder Überwachungskamera, hier also beispielsweise die Bilder 1, 2, 3, oder auch jeweils korrespondierende Umgebungsdaten, die die jeweilige Belegung bzw. Belegungssituation angeben oder charakterisieren, erfassen. Damit kann die Servereinrichtung 15 dann, insbesondere automatisch, das jeweilige Mosaikbild 9 erzeugen. Die jeweilige Hybridkarte 10 kann in unterschiedlichen Varianten des Verfahrens beispielsweise durch die Servereinrichtung 15 oder durch das Kraftfahrzeug 14 bzw. dessen Assistenzsystem 17 erzeugt werden.

Die dann, wenn das Kraftfahrzeug 14 sich auf dem Parkplatz 4 befindet und abgestellt werden soll, gegebene Belegung bzw. Belegungssituation kann anhand von dann aufgenommenen Sensordaten bestimmt werden. Diese können beispielsweise mittels Sensoren des Parkplatzes 4 selbst und/oder von dem Kraftfahrzeug 14 aus mit mittels einer fahrzeugeigenen Sensorik 25 aufgenommen werden. Diese Sensordaten können beispielsweise von der Servereinrichtung 15 über die Serverschnittstelle 22 erfasst werden, um zu bestimmen, an welchen Stellen entsprechende Symbole, hier also beispielsweise die Fahrzeugsymbole 11, das Parksymbol 12 und das Ladesäulensymbol 13, eingeblendet, also dem zugrundeliegenden Mosaikbild 9 überlagert werden sollen. Ebenso können die Sensordaten beispielsweise von dem Assistenzsystem 17 über dessen Schnittstelle 18 erfasst werden. Das Assistenzsystem 17 kann dann basierend darauf und basierend auf dem, beispielsweise ebenfalls über die Schnittstelle 18 von der Servereinrichtung 15 abgerufenen oder bereits in dem Datenspeicher 20 hinterlegten, Mosaikbild 9 die jeweilige Hybridkarte 10 erzeugen. Diese kann dann, beispielsweise ebenfalls über die Schnittstelle 18, an die Anzeigeneinrichtung 21 ausgegeben werden. Dies kann beispielsweise jeweils auf ein automatisches Erkennen eines Einparkwunsches des Fahrers 16 oder auf eine Aktivierung eines entsprechenden Parkunterstützungsmodus, beispielsweise durch eine entsprechende Bedienhandlung des Fahrers 16, durchgeführt werden.

Basierend auf der so angezeigten Hybridkarte 10 kann der Fahrer 16 dann beispielsweise einen Parkstand zum Abstellen des Kraftfahrzeugs 14 auswählen. Ebenso kann beispielsweise das Assistenzsystem 17 einen freien Parkstand 7 auswählen und als Zielparkstand, also Zielabstellfläche vorschlagen und beispielsweise entsprechend in der Hybridkarte 10 kennzeichnen. Hier kann beispielsweise durch das Parksymbol 12 ein freier Parkstand 7 als ausgewählter Zielparkstand gekennzeichnet werden.

Insgesamt zeigen die beschriebenen Beispiele wie eine Visualisierungskarte für einen Parkassistenzsystem erzeugt und genutzt werden kann, die eine verbesserte Unterstützung bietet bzw. ermöglicht.

### Bezugszeichenliste

- 1: erstes Bild
- 2: zweites Bild
- 3: drittes Bild
- 4: Parkplatz
- 5: geparkte Fahrzeuge
- 6: belegter Parkstand
- 7: freier Parkstand
- 8: Beobachtungsfahrzeuge
- 9: Mosaikbild
- 10: Hybridkarte
- 11: Fahrzeugsymbol
- 12: Parksymbol
- 13: Ladesäulensymbol
- 14: Kraftfahrzeug
- 15: Servereinrichtung
- 16: Fahrer
- 17: Assistenzsystem
- 18: Schnittstelle
- 19: Prozessor
- 20: Datenspeicher
- 21: Anzeigeeinrichtung
- 22: Serverschnittstelle
- 23: Serverprozessor
- 24: Serverdatenspeicher
- 25: Sensorik
- t1: erster Zeitpunkt
- t2: zweiter Zeitpunkt
- t3: dritter Zeitpunkt

## Patentansprüche

1. Verfahren zum Unterstützen eines Fahrzeugführers (16) beim Abstellen eines Fahrzeugs (16) in einer Abstellfläche (7), die sich in einem Bereich (4) mit mehreren solchen Abstellflächen (6, 7) befindet, wobei
- in einem dem Abstellen zeitlich vorgelagerten Zeitraum mehrere Kamerabilder (1, 2, 3) des Bereichs (4) zu verschiedenen Zeitpunkten (t1, t2, t3) mit unterschiedlichen Belegungen der Abstellflächen (6, 7) durch Fahrzeuge (5) aufgenommen werden,
- aus diesen Kamerabildern (1, 2, 3) diejenigen Bildteile, die freie Abstellflächen (7) zeigen, zu einem Mosaikbild (9) des Bereichs (4) zusammengesetzt werden, das den gesamten Bereich (4) mit ausschließlich freien Abstellflächen (7) zeigt,
- wenn sich das Fahrzeug (16) zum Abstellen in dem Bereich (4) befindet, mittels eines Sensors (25) Umgebungsdaten zumindest eines Teils des Bereichs (4) neben dem Fahrzeug (16) aufgenommen werden, die eine jeweils aktuelle Belegung der dortigen Abstellflächen (6, 7) charakterisieren,
- anhand der Umgebungsdaten zumindest in diesem Teil des Bereichs (4) aktuell belegte Abstellflächen (6) ermittelt werden,
- eine Hybridkarte (10) zumindest dieses Teils des Bereichs (4), welche die dortige aktuelle Belegung der Abstellflächen (6, 7) zeigt, erzeugt wird, indem die anhand der Umgebungsdaten als aktuell belegt ermittelten Abstellflächen (6) als solche in dem Mosaikbild (9) gekennzeichnet werden, und
- die Hybridkarte (10) zum Unterstützen des Fahrzeugführers (16) bereitgestellt wird.

2. Verfahren nach Anspruch 1,
**dadurch gekennzeichnet, dass**
zum Erkennen der freien Abstellflächen (7) in den Kamerabildern (1, 2, 3) auf diese ein bildverarbeitendes Objekterkennungsverfahren angewendet wird.

3. Verfahren nach einem der vorhergehenden Ansprüche,
**dadurch gekennzeichnet, dass**
die in dem dem Abstellen zeitlich vorgelagerten Zeitraum aufgenommenen Kamerabilder (1, 2, 3) Luft- und/oder Satellitenbilder sind oder umfassen und zum Erkennen der freien Abstellflächen (7) in den Kamerabildern (1, 2, 3) zu deren jeweiligem Aufnahmezeitpunkt (t1, t2, t3) auch mittels eines von einer zum Aufnehmen der Kamerabilder verwendeten Kamera verschiedenen lokalen Sensors (25), insbesondere eines sich dann in dem Bereich (4) befindenden Fahrzeugs (8), in dem Bereich (4) Sensordaten aufgenommen werden, aus diesen dann freie Abstellflächen (7) und/oder belegte Abstellflächen (6) ermittelt werden und darauf basierend die die freien Abstellflächen (7) zeigenden Bildteile der Luft- und/oder Satellitenbilder (1, 2, 3) bestimmt werden.

4. Verfahren nach einem der vorhergehenden Ansprüche,
**dadurch gekennzeichnet, dass**
zum Zeigen der aktuellen Belegung in der Hybridkarte (10) den zu den anhand der Umgebungsdaten als aktuell belegt erkannten Abstellflächen (6) korrespondierenden Bildteilen des Mosaikbilds (9) jeweils ein, insbesondere stilisiertes, vorgegebenes Fahrzeugsymbolbild (11) überlagert wird.

5. Verfahren nach einem der vorhergehenden Ansprüche,
**dadurch gekennzeichnet, dass**
zum Zeigen der aktuellen Belegung in der Hybridkarte (10) den zu anhand der Umgebungsdaten als aktuell frei erkannten Abstellflächen (7) korrespondierenden Bildteilen des Mosaikbilds (9) ein, insbesondere stilisiertes, vorgegebenes Abstellflächensymbolbild (12) überlagert wird.

6. Verfahren nach einem der vorhergehenden Ansprüche,
**dadurch gekennzeichnet, dass**
zum Erzeugen der Hybridkarte (10) dem Mosaikbild (9) auch vorgegebene, insbesondere stilisierte, Symbole (13) für vorgegebene Ausstattungsmerkmale, insbesondere Lademöglichkeiten, positionsgenau überlagert werden.

7. Verfahren nach einem der vorhergehenden Ansprüche,
**dadurch gekennzeichnet, dass**
automatisch eine aktuell freie Abstellfläche (7) als Zielabstellfläche ausgewählt und in der Hybridkarte (10) ein Hinweis auf diese ausgewählte Zielabstellfläche angezeigt wird.

8. Digitale Hybridkarte (10) eines Bereichs (4), der mehrere Abstellflächen (6, 7) für Fahrzeuge (5, 14) umfasst, wobei die, insbesondere gemäß einem Verfahren nach einem der vorhergehenden Ansprüche erzeugte, Hybridkarte (10) den Bereich (4) als Kombination aus fahrzeugfreien Bildteilen von Kamerabildern (1, 2, 3) des Bereichs (4) und diesen gemäß einer jeweils aktuellen Belegung der Abstellflächen (6, 7) überlagerten Kennzeichnungen (11, 12) der jeweils aktuell belegten Abstellflächen (6) und/oder der jeweils aktuell freien Abstellflächen (7) darstellt.

9. Assistenzsystem (15, 17) zum Unterstützen eines Fahrzeugführers (16) beim Abstellen eines Fahrzeugs (16), aufweisend eine Eingangsschnittstelle (18, 22), eine Datenverarbeitungseinrichtung (19, 20, 23, 24) und eine Ausgangsschnittstelle (18, 22), wobei das Assistenzsystem (15, 17) dazu eingerichtet ist,
- ein Mosaikbild (9) eines mehrere Abstellflächen (6, 7) für Fahrzeuge (5, 14) umfassenden Bereichs (4), das aus fahrzeugfreien Bildteilen von mehreren Kamerabildern (1, 2, 3) des Bereichs (4) zusammengesetzt ist, zu erzeugen oder zu erfassen,
- Umgebungsdaten zumindest eines Teils des Bereichs (4), die eine dortige aktuelle Belegung der Abstellflächen (6, 7) charakterisieren, zu erfassen, und
- basierend auf dem Mosaikbild (9) und den aktuellen Umgebungsdaten eine Hybridkarte (10), in der aktuell belegte Abstellflächen (6) und/oder aktuell freie Abstellflächen (7) durch entsprechende Überlagerungen (11, 12) der korrespondierenden Bildteile des Mosaikbilds (9) gekennzeichnet sind, zu erzeugen und zum Unterstützen des Fahrzeugführers (16) bereitzustellen.

10. Kraftfahrzeug (16), aufweisend ein Assistenzsystem (17) nach Anspruch 9 in einer Ausgestaltung für ein Kraftfahrzeug.
